# EUROPÄISCHE PATENTANMELDUNG

(11) **EP 2 842 859 A1**
(43) Veröffentlichungstag der Anmeldung: **04.03.2015**
(21) Anmeldenummer: 14002968.7
(22) Anmeldetag: 27.08.2014
(51) Int. Cl.: B62M 9/127, B62K 19/16, B62K 19/24, B62K 19/30, B62K 25/02

(54) **Fahrradrahmen aus faserverstärktem Werkstoff mit Adapterplatten für das Hinterrad**

(30) Priorität: 28.08.2013 DE 102013014336
(71) Anmelder: Winora-Staiger GmbH, 97526 Sennfeld (DE)
(72) Erfinder: Beutner, Ingo, 97737 Gemünden (DE)
(74) Vertreter: Weigel, Matthias

(57) **Zusammenfassung**

Die Erfindung betrifft einen Fahrradrahmen (10) aus einem faserverstärktem Werkstoff, insbesondere aus durch Kohlenstofffasern verstärktem Kunststoff, mit einer Hinterradaufhängung (12) zum Lagern des Hinterrades. Erfindungsgemäß ist an zumindest einer der beiden Kettenstreben (16) der Hinterradaufhängung (12) eine Aufnahme (20) ausgeformt ist, in welcher eine austauschbare an die Nabe des zu verwendenden Hinterrades jeweils angepasste Adapterplatte (38) lösbar befestigt ist, in welcher die Achse des Hinterrades zu lagern ist.

## Beschreibung

Die Erfindung betrifft einen Fahrradrahmen aus einem faserverstärktem Werkstoff, insbesondere aus durch Kohlenstofffasern verstärktem Kunststoff, mit einer Hinterradaufhängung zum Lagern des Hinterrades.

Seit geraumer Zeit werden immer mehr Fahrradrahmen aus faserverstärkten Werkstoffen gefertigt. Als besonders geeignet für die Herstellung von Fahrradrahmen haben sich dabei mit Kohlenstofffasern verstärkte Kunststoffe (CFK) gezeigt, da sich diese Materialien durch eine hohe Festigkeit und Steifigkeit bei gleichzeitig geringem Gewicht auszeichnen.

Nachteilig an Fahrradrahmen, die aus faserverstärkten Werkstoffen, wie mit Kohlenstofffasern verstärkten Kunststoffen, gefertigt sind, ist die aufwendige Herstellung der Fahrradrahmen. Die Fahrradrahmen aus Kohlenstofffaser verstärkten Kunststoffen müssen in mehreren Schritten aus Fasermatten und flüssigen Kunststoffkomponenten gefertigt und in Formen durch Wärmebehandlung bei hohen Temperaturen ausgehärtet werden.

Aufgrund der aufwendigen Herstellungsverfahren wird generell versucht, die Variantenvielfalt bei den Fahrradrahmenformen möglichst gering zu halten.

Dies hat jedoch zur Folge, dass die Montage konstruktiv unterschiedlich ausgeführter und gestalteter Hinterradnaben erschwert ist. So werden, um die Montage unterschiedlicher Naben zu ermöglichen, mehr Befestigungsöffnungen, Erhebungen und ähnliches an der Hinterradaufhängung bei aus faserverstärkten Werkstoffen gefertigten Fahrradrahmen ausgeformt, um der Möglichkeit der Montage unterschiedlicher Hinterradnaben Rechnung zu tragen.

Der vorliegenden Erfindung liegt daher die Aufgabe zugrunde, einen aus faserverstärktem Werkstoff hergestellten Fahrradrahmen bereitzustellen, bei dem die Hinterradaufhäng auf einfache Weise an unterschiedliche Hinterradnaben angepasst werden kann.

Bei einem Fahrradrahmen der eingangs genannten Art wird diese Aufgabe erfindungsgemäß dadurch gelöst, dass an zumindest einer der beiden Kettenstreben der Hinterradaufhängung eine Aufnahme ausgeformt ist, in welcher eine austauschbare an die Nabe des zu verwendenden Hinterrades jeweils angepasste Adapterplatte lösbar befestigt ist, in welcher die Achse des Hinterrades zu lagern ist.

Bei dem erfindungsgemäßen Fahrradrahmen wird an zumindest einer der Kettenstreben der Hinterradaufhängung eine Aufnahme definierte Gestalt ausgeformt, die bei allen herzustellenden Fahrradrahmen vorzugsweise identisch ausgeführt ist. Die unterschiedlichen Formen von Hinterradnaben werden durch die erfindungsgemäß verwendeten Adapterplatten berücksichtigt. Je nachdem welche Hinterradnabe montiert werden soll, werden unterschiedliche Adapterplatten verwendet. In diesem Zusammenhang wird betont, dass die Adapterplatten auch so gestaltet und ausgelegt sein können, dass an der Adapterplatte auch für das für die jeweils zu montierenden Hinterradnabe zu verwendende Schaltwerk entsprechende Befestigungsstellen vorgesehen sind.

Dadurch, dass bei dem erfindungsgemäßen Fahrradrahmen bei der Hinterradaufhängung auf unterschiedliche Nabenformen des Hinterrades keine Rücksicht genommen werden muss, kann die Aufnahme für die Adapterplatte im Hinblick auf die Montage der Adapterplatte optimiert werden und auf zusätzliche Befestigungsöffnungen und Befestigungserhebungen, beispielsweise für Schaltwerke, Bremshebel, etc., verzichtet werden, welche die Festigkeit und Steifigkeit insbesondere im Bereich der Lagerstelle der Hinterradnabe beeinträchtigen könnten.

Weitere Vorteile der Erfindung ergeben sich aus der nachfolgenden Beschreibung, den Unteransprüchen und den Zeichnungen.

Bei einer besonders bevorzugten Weiterbildung des erfindungsgemäßen Fahrradrahmens ist an der Kettenstrebe der Hinterradaufhängung eine Aufnahme ausgeformt, in die die Adapterplatten einzusetzen und zu befestigen sind, wobei eine der Adapterplatten, sofern notwendig, zusätzlich mit Befestigungsstellen für das Schaltwerk versehen ist.

Um einen sicheren Halt der Adapterplatte an dem Fahrradrahmen sicherzustellen, ist die Adapterplatte nicht nur kraftschlüssig durch entsprechendes mechanisches Vorspannen durch Befestigungselemente, sondern darüber hinaus durch entsprechendes Vorsehen von Erhebungen, Zapfen, Anlageflächen, und ähnlichem, die sowohl in der Aufnahme als auch komplementär an der Adapterplatte ausgebildet sind, auch formschlüssig am Fahrradrahmen gesichert.

So weist die Aufnahme bei einer besonders bevorzugten Ausführungsform des erfindungsgemäßen Fahrradrahmens wenigstens zwei Anlageflächen auf, an denen die Adapterplatte in montiertem Zustand mit komplementär an ihr ausgebildeten Abstützflächen anliegt. Die Abstützflächen können hierzu unter einem Winkel zueinander verlaufen, um so eine Abstützung in unterschiedlichen Belastungsrichtungen zu gewährleisten. Ferner werden, je größter die Abstützflächen sind, die an der Adapterplatte auftretenden Kräfte gleichmäßig auf die Abstützflächen verteilt, so dass die auftretenden Kräfte großflächig an den Fahrradrahmen übertragen und gleichzeitig die Befestigungselemente entlastet werden. Die Abstützflächen verlaufen hierbei vorzugsweise in Ebenen, die im wesentlichen parallel zur Drehachse der Nabe verlaufen.

Dieser Effekt wird ferner erhöht, wenn die Adapterplatte mit kantenförmigen Erhebungen versehen ist, welche sich normal von der Adapterplatte erheben und damit die Flächen, mit denen sich die Adapterplatte an den Abstützflächen tatsächlich abstützen, zusätzlich vergrößern und hierdurch die auftretende Flächenpressung verringert werden.

Bei einer besonders bevorzugten Ausführungsform des erfindungsgemäßen Fahrradrahmens ist an der Aufnahme eine mit der hohlen Kettenstrebe in Verbindung stehende Öffnung vorgesehen ist, die von der montierten Adapterplatte abgedeckt wird. Diese Öffnung kann, sofern notwendig, als Austrittsöffnung für Kabel, Leitungen oder Kabelzüge verwendet werden. Werden durch die Öffnung Kabel, Leitungen oder Kabelzüge geführt, beispielsweise um das Schaltwerk der Hinterradnabe zu betätigen, ist in der Adapterplatte eine Durchgangsöffnung vorgesehen, die mit der Öffnung an der Kettenstrebe zur Durchführung der Kabel, Leitungen oder Kabelzüge in Verbindung steht. Sofern sinnvoll, beispielsweise bei Bowdenzügen, kann sich der Mantel des Bowdenzuges mit seiner Stirnseite an der Adapterplatte abstützen, während der Bowdenzug durch die Durchgangsöffnung geführt wird.

Um die Montage der Adapterplatte zu erleichtern und auch um die Montage von ungeeigneten Adapterplatten zu vermeiden, wird ferner vorgeschlagen, an der Aufnahme wenigstens eine Ausrichtöffnung vorzusehen, mit der ein an der Adapterplatte an geeigneter Stelle vorgesehener Zapfen in Eingriff kommt, wenn die Adapterplatte montiert wird. Dabei ist es ferner von Vorteil, wenn die an der Aufnahme ausgebildete Ausrichtöffnung als Durchgangsöffnung ausgebildet ist, während sich durch den Zapfen eine Durchgangsbohrung für ein Befestigungselement erstreckt, welches durch die Durchgangsöffnung der Aufnahme ragt. Dadurch erfüllen die Ausrichtöffnung und der Zapfen zusätzlich eine Funktion als Befestigungsstelle.

Des weiteren kann durch entsprechende Kombination der zuvor beschrieben Abstützflächen mit der Ausrichtöffnung an der Aufnahme einerseits und den kantenförmigen und Zapfen an der Adapterplatte andererseits auf sehr wirksame Weise sicher gestellt werden, dass am jeweiligen Fahrradrahmen nur jeweils geeignete Adapterplatten montiert werden können.

Um die Festigkeit und Steifigkeit des Fahrradrahmens im Bereich der Lagerung der Hinterradnabe weiter zu erhöhen, beispielsweise bei Fahrradrahmen, die hohen, vor allem stoßartigen Belastungen ausgesetzt sind, wie Mountainbikes, wird darüber hinaus vorgeschlagen, an der der Aufnahme abgewandten Rückseite der Kettenstrebe eine Ausnehmung zur Aufnahme einer Gegenplatte vorzusehen, wobei die Gegenplatte als Widerlager für Befestigungselemente dient, die sich durch an der Kettenstrebe vorgesehene Durchgangsöffnungen erstrecken und die die Adapterplatte und die Gegenplatte lösbar miteinander verbinden. Auch die Ausnehmung kann, wie die Aufnahme, mit entsprechenden Stützflächen versehen sein, an denen die Gegenplatte zur Ausbildung eines Formschlusses zur Anlage kommen kann.

Nachfolgend wird die Erfindung anhand eines Ausführungsbeispiels unter Bezugnahme auf die Zeichnung näher erläutert. Darin zeigt
- Fig. 1: eine perspektivische Darstellung eines Abschnittes einer an einem erfindungsgemäßen Fahrradrahmen rechts angeordneten Hinterradaufhängung von innen gesehen,
- Fig. 2: eine perspektivische Darstellung des Abschnittes der rechts angeordneten Hinterradaufhängung von außen gesehen,
- Fig. 3: eine perspektivische Darstellung einer ersten Variante einer Adapterplatte für eine Achse mit Schnellspanner und einem Halteabschnitt für das Schaltwerk, die an der rechts angeordneten Hinterradaufhängung zu befestigen ist,
- Fig. 4: eine perspektivische Darstellung einer zweite Variante einer Adapterplatte für eine Achse mit Schnellspanner und einem Halteabschnitt für das Schaltwerk, die an der rechts angeordneten Hinterradaufhängung zu befestigen ist,
- Fig. 5: eine perspektivische Darstellung einer dritten Variante einer Adapterplatte für eine Steckachse, mit einem Halteabschnitt für ein alternatives Schaltwerk, die an der rechts angeordneten Hinterradaufhängung zu befestigen ist,
- Fig. 6: eine perspektivische Darstellung einer vierten Variante einer Adapterplatte für eine Steckachse, mit einem Halteabschnitt für das alternative Schaltwerk, die an der rechts angeordneten Hinterradaufhängung zu befestigen ist,
- Fig. 7: eine perspektivische Darstellung einer Gegenplatte,
- Fig. 8.: eine Außenansicht des Abschnittes aus Fig. 1 unmittelbar vor der Montage der in Fig. 3 gezeigten ersten Version einer Adapterplatte gemeinsam mit einer Gegenplatte,
- Fig. 9.: eine Außenansicht des Abschnittes aus Fig. 8 unmittelbar nach der Montage,
- Fig. 10: eine perspektivische Darstellung einer ersten Variante einer Adapterplatte für eine Achse mit Schnellspanner, die an der links angeordneten Hinterradaufhängung zu befestigen ist, und
- Fig. 11: eine perspektivische Darstellung einer zweiten Variante einer Adapterplatte für eine Steckachse, die an der links angeordneten Hinterradaufhängung zu befestigen ist.

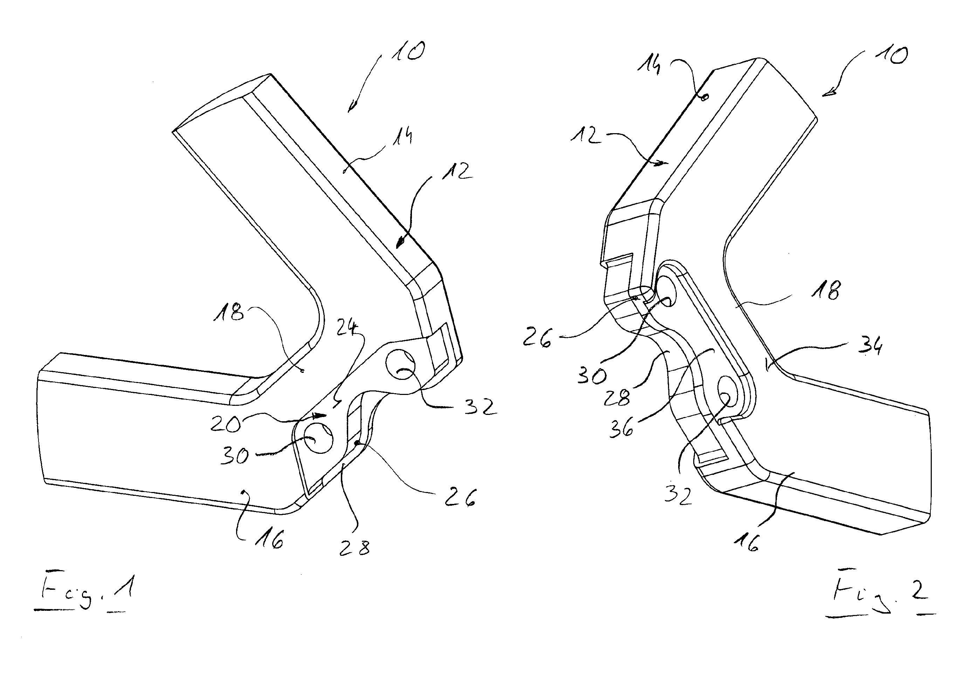

In Fig. 1 ist eine perspektivische Darstellung zu sehen, in der der Abschnittes einer an einem erfindungsgemäßen Fahrradrahmen 10 rechts angeordneten Hinterradaufhängung 12 von innen gesehen dargestellt ist.

Der Fahrradrahmen 10 ist im wesentlichen aus einem Kohlenstofffaser verstärkten Kunststoff gefertigt. In Fig. 1 ist der Übergang der Sitzstrebe 14 in die Kettenstrebe 16 gezeigt. Der Übergang 18 ist hierbei als ein abgewinkelter Abschnitt der Kettenstrebe 16 definiert, der in die Sitzstrebe 14 übergeht.

Wie Fig. 1 weiter zu entnehmen ist, weist, der Übergang 18 eine Aufnahme 20 auf, welche an der nach innen zeigenden Flachseite 22 in Form einer Tasche 24 ausgeführt ist, während der nach hinten zeigende rechtwinklig zur innen zeigenden Flachseite 22 verlaufende Flächenabschnitt 26 eine bogenförmige Aussparung 28 aufweist. Die Tasche 24 und die bogenförmige Aussparung 28 bilden gemeinsam die Aufnahme 20.

In der Aufnahme 20 sind ferner zwei benachbart zueinander angeordnete Durchgangsöffnungen 30 und 32 vorgesehen, die beiderseits der bogenförmigen Aussparung 28 in der Tasche 24 ausgebildet sind und sich durch den Übergang 18 zur Außenseite 34 hin erstrecken.

Fig. 2 zeigt in perspektivischer Darstellung den in Fig. 1 gezeigten Abschnitt der rechts angeordneten Hinterradaufhängung, jedoch von außen gesehen. Wie Fig. 2 zu entnehmen ist, ist an der Außenseite 34 eine im wesentlichen rechtwinklige, an den Enden jeweils abgerundete Ausnehmung 36 ausgebildet, welche an den nach hinten zeigenden Flächenabschnitt 24 angrenzt.

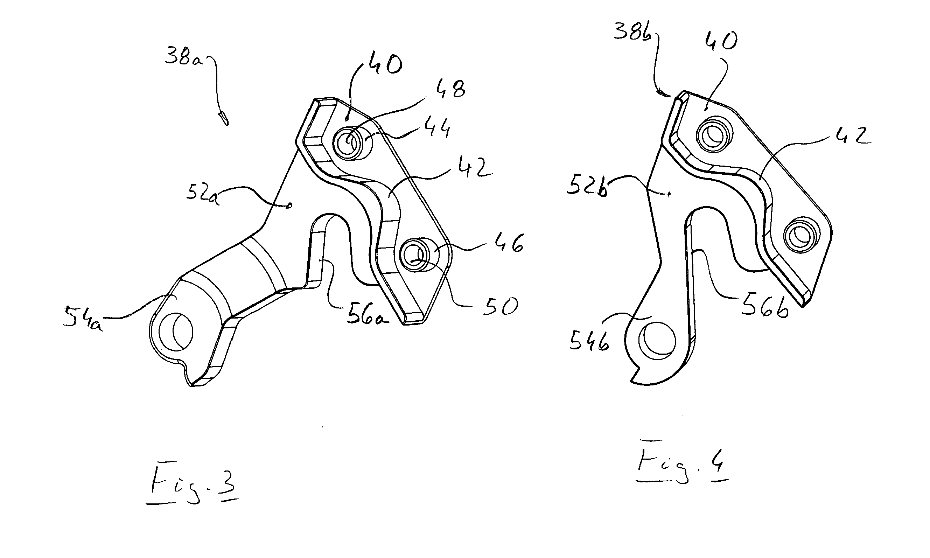

In den Fig. 3 bis 6 sind vier unterschiedliche Varianten einer Adapterplatte 38a bis 38d gezeigt, die für unterschiedliche Nabentypen bzw. Schaltwerke an der Aufnahme 20 befestigt werden können. Die Adapterplatten 38a bis 38d sind aus einem Stahl, insbesondere aus einem hochfesten Stahl, oder einem vergleichbaren widerstandsfähigem Material gefertigt.

Jede Adapterplatte 38a bis 38d hat einen Befestigungsabschnitt 40, der für alle Adapterplatten 38a bis 38d identisch ausgebildet ist und mit dem die Adapterplatten 38a bis 38d an der Aufnahme 20 zu befestigen sind. Demzufolge wird nachfolgend unter Bezugnahme auf die Fig. 3 sowie die darin gezeigte Adapterplatte 38a stellvertretend für die anderen Adapterplatten 38b bis 38d der Aufbau des Befestigungsabschnittes 40 näher erläutert wird.

Der Befestigungsabschnitt 40 ist an seiner später in der Tasche 24 der Aufnahme 20 zugewandten Seite abgeflacht und durch eine bogenförmige Erhebung 42 begrenzt. Die Innenfläche der bogenförmigen Erhebung 42 ist hierbei komplementär zu dem Verlauf der bogenförmigen Aussparung 28 der Aufnahme 20 ausgebildet. Im Inneren des Befestigungsabschnittes 40 sind zwei Zapfen 44 und 46 ausgebildet, die bezüglich der bogenförmigen Erhebung 42 so angeordnet sind, dass, wenn die Adapterplatte 38a in die Aufnahme 20 eingesetzt wird, die beiden Zapfen 44 und 46 mit den beiden Durchgangsöffnungen 30 und 32 in Eingriff kommen. Durch jeden Zapfen 44 und 46 verläuft jeweils ein Durchgangsgewinde 48 bzw. 50. An den Befestigungsabschnitt 40 schließt sich die eigentliche Nabenbefestigung 52 sowie ein an diese angeformter Halteabschnitt 54 für ein zu montierendes Schaltwerk an.

Bei der in Fig. 3 gezeigten ersten Variante weist die Nabenbefestigung 52a ein offenes Langloch 56a auf, in das eine Nabe mit Schnellspanner eingesetzt werden kann. Der angeordnete Halteabschnitt 54a ist zweifach gekröpft und dient zum Befestigen eines ersten Schaltwerktyps.

Die in Fig. 4 gezeigte zweite Variante entspricht im wesentlichen der in Fig. 3 gezeigten ersten Variante, jedoch mit dem Unterschied, dass der Halteabschnitt 54b für das Schaltwerk nicht gekröpft, sondern flach ausgebildet, um die Befestigung eines zweiten Schaltwerktyps zu ermöglichen.

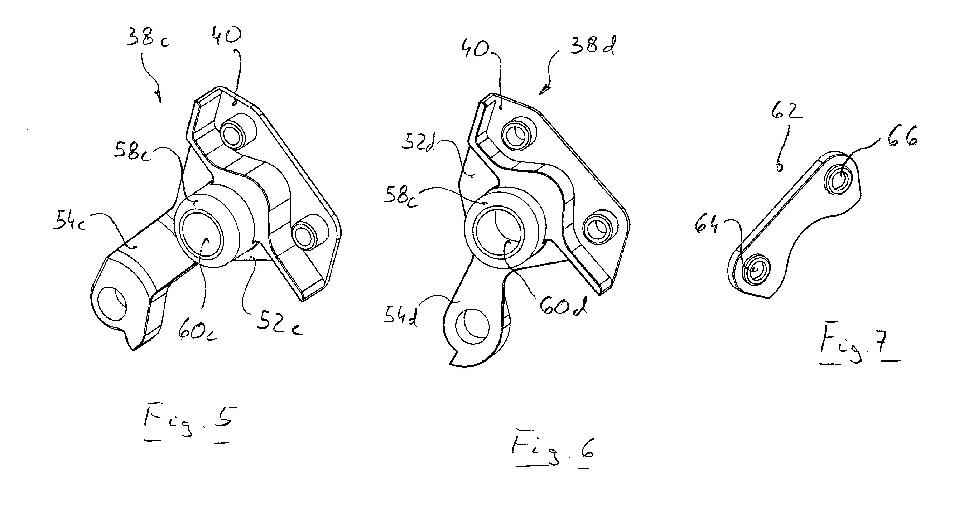

Bei den in den Fig. 5 und 6 gezeigten dritten und vierten Variante entsprechen die Halteabschnitte 54c und 54d jeweils den gekröpft bzw. flach ausgebildeten Halteabschnitten 54a bzw., 54d der in den Fig. 3 und 4 gezeigten Varianten. Wesentlicher Unterschied der dritten und vierten Variante zu den ersten beiden Varianten besteht in der Nabenbefestigung 52c bzw. 52d. Hier sind anstatt eines offenen Langloches jeweils ein Zapfen 58c bzw. 58d vorgesehen, in dem ein Lager 60c bzw. 60d für eine Steckachse einer Nabe ausgebildet ist.

In Fig. 7 ist in perspektivischer Darstellung einer Gegenplatte 62 dargestellt ist. Die Gegenplatte 62 ist gleichfalls aus einem Metallmaterial gefertigt. Die Außenkontur der Gegenplatte 62 entspricht der Innenkontur der Ausnehmung 36, die an der Außenseite 34 des Übergangs 18 ausgebildet ist. Des weiteren sind zwei angesenkte Bohrungen 64 und 66 an der Gegenplatte 62 vorgesehen, die bei in die Ausnehmung 36 eingesetzter Gegenplatte 62 mit den Durchgangsöffnungen 30 und 32 fluchten.

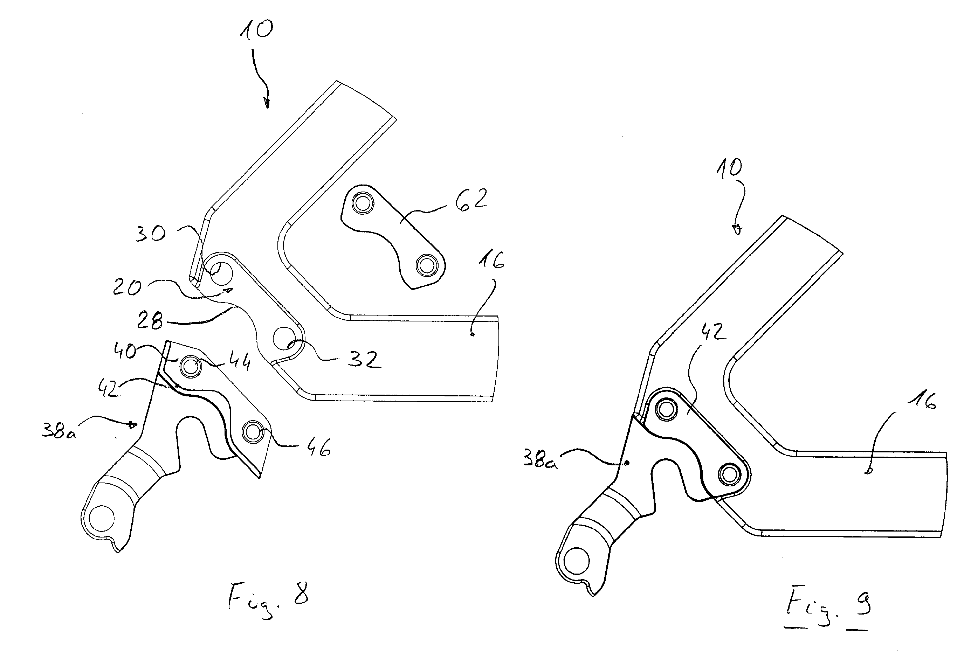

In den Fig. 8 und 9 ist die Montage der in Fig. 3 gezeigten Adapterplatte 38a und der Gegenplatte 62 an dem Übergang 18 dargestellt.

Die Adapterplatte 38a wird mit ihrem Befestigungsabschnitt 40a in die Aufnahme 20 eingesetzt, wobei die Zapfen 44 und 46 in die Durchgangsbohrungen 30 und 32 eingeführt werden. Dabei kommt die bogenförmige Erhebung 42 mit der bogenförmigen Aussparung 28 in Eingriff und bildet gemeinsam mit den Zapfen 44 und 46 eine formschlüssige Verbindung der Adapterplatte 38a mit dem Übergang 18. Anschließend wird die Gegenplatte 62 in die Ausnehmung 36 eingesetzt und die Adapterplatte 38a durch Schrauben (nicht dargestellt), die durch die Bohrungen 64 und 66 der Gegenplatte 62 geführt werden, verschraubt und so auch kraftschlüssig am Übergang 18 gesichert.

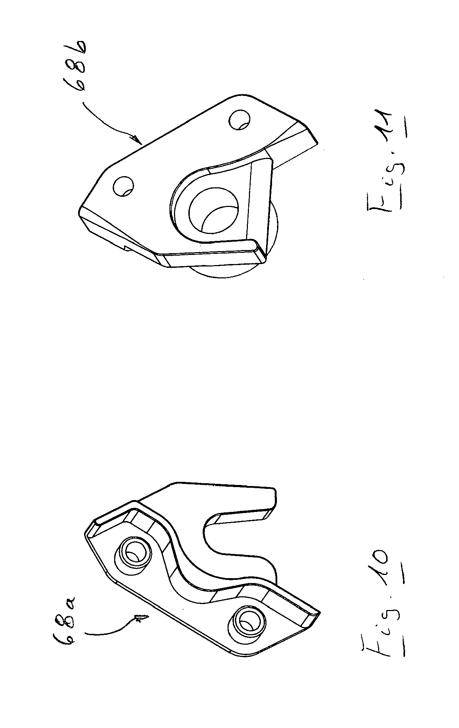

In den Fig. 10 und 11 sind in perspektivischer Darstellung einer ersten und eine zweite Variante einer an der linken Hinterradaufhängung (nicht dargestellt) des erfindungsgemäßen Fahrradrahmens 10 zu befestigenden Adapterplatte 68a bzw. 68b gezeigt. Die linke Hinterradaufhängung ist im vorliegenden Fall spiegelsymmetrisch zur rechten Hinterradaufhängung 12 ausgebildet.

Die Adapterplatten 68a und 68b entsprechen im wesentlichen den in den Fig. 3 und 5 gezeigten Adapterplatten 38a und 38c, jedoch mit dem Unterschied, dass sie spiegelverkehrt ausgebildet sind und der Halteabschnitt 54a bzw. 54c für das Schaltwerk jeweils fehlt. Die Adapterplatten 68a und 68b werden in entsprechender Weise an der linken Hinterradaufhängung befestigt, wie sie unter Bezugnahme auf die Fig. 8 und 9 beschrieben wurde.

Ferner können die Adapterplatten 38a bis 38d bzw. 68a und 68b in ihren bogenförmigen Erhebungen 42 mit Durchgangsöffnungen versehen sein, durch die Kabel, Leitungen oder Kabelzüge, beispielsweise für das Schaltwerk, geführt werden können, welche durch eine an der Kettenstrebe 16 vorgesehene Öffnung geführt sind, wobei die Öffnung dann durch die Adapterplatte 38a, 38b, 38c bzw. 38d verschlossen wird.

### Bezugszeichenliste:

- 10: Fahrradrahmen
- 12: Hinterradaufhängung
- 14: Sitzstrebe
- 16: Kettenstrebe
- 18: Übergang
- 20: Aufnahme
- 22: nach innen zeigen Flachseite
- 24: Tasche
- 26: nach hinten zeigender Flächenabschnitt
- 28: bogenförmige Aussparung
- 30: Durchgangsöffnung
- 32: Durchgangsöffnung
- 34: Außenseite
- 36: Ausnehmung
- 38a bis d: Adapterplatten
- 40: Befestigungsabschnitt
- 42: bogenförmige Erhebung
- 44: Zapfen
- 46: Zapfen
- 48: Durchgangsgewinde
- 50: Durchgangsgewinde
- 52a bis d: Nabenbefestigung
- 54a bis d: Halteabschnitt für das Schaltwerk
- 56a, b: Langloch
- 58c, d: Zapfen
- 60c, d: Lager
- 62: Gegenplatte
- 64: Bohrung
- 66: Bohrung
- 68a, b: Adapterplatten

## Patentansprüche

1. Fahrradrahmen aus einem faserverstärktem Werkstoff, insbesondere aus durch Kohlenstofffasern verstärktem Kunststoff, mit einer Hinterradaufhängung (12) zum Lagern des Hinterrades,
**dadurch gekennzeichnet,**
**dass** an zumindest einer der beiden Kettenstreben (16) der Hinterradaufhängung (12) eine Aufnahme (20) ausgeformt ist, in welcher eine austauschbare an die Nabe des zu verwendenden Hinterrades jeweils angepasste Adapterplatte (38) lösbar befestigt ist, in welcher die Achse des Hinterrades zu lagern ist.

2. Fahrradrahmen nach Anspruch 1, **dadurch gekennzeichnet, dass** an jeder Kettenstrebe (16) eine Aufnahme (20) vorgesehen ist, und dass in jeder Aufnahme (20) jeweils eine an die Nabe des zu verwendenden Hinterrades angepasste Adapterplatte (38, 68) lösbar befestigt ist.

3. Fahrradrahmen nach Anspruch 1 oder 2, **dadurch gekennzeichnet, dass** die Adapterplatte (38, 68) kraftschlüssig und formschlüssig mit dem Fahrradrahmen (10) verbunden ist.

4. Fahrradrahmen nach Anspruch 3, **dadurch gekennzeichnet, dass** die Aufnahme (20) wenigstens zwei Abstützflächen (24, 26) aufweist, an denen die Adapterplatte (38, 68) in montiertem Zustand mit komplementär an ihr ausgebildeten Anlageflächen (42) anliegt.

5. Fahrradrahmen nach Anspruch 4, **dadurch gekennzeichnet, dass** an der Adapterplatte (38) kantenförmige Erhebungen (42) ausgeformt sind, die komplementär zu den Abstützflächen (28) der Aufnahme (20) ausgebildet sind.

6. Fahrradrahmen nach einem der Ansprüche 1 bis 5, **dadurch gekennzeichnet, dass** an der Aufnahme (20) eine mit der hohlen Kettenstrebe (16) in Verbindung stehende Öffnung vorgesehen ist, und dass die montierte Adapterplatte (28, 68) die Öffnung abgedeckt.

7. Fahrradrahmen nach Anspruch 6 **dadurch gekennzeichnet, dass** an der Adapterplatte (38, 68) eine Durchgangsöffnung vorgesehen ist, die mit der Öffnung an der Kettenstrebe (16) zur Durchführung von Kabeln, Leitungen oder Zügen in Verbindung steht.

8. Fahrradrahmen nach einem der Ansprüche 1 bis 7, **dadurch gekennzeichnet, dass** an der Aufnahme (20) wenigstens eine Ausrichtöffnung (30, 32) vorgesehen ist, und dass an der Adapterplatte (28, 68) wenigstens ein Zapfen (44, 46) vorgesehen sind, welche mit der Ausrichtöffnung (30, 32) in Eingriff steht.

9. Fahrradrahmen nach Anspruch 8, **dadurch gekennzeichnet, dass** die an der Aufnahme (20) ausgebildete Ausrichtöffnung als Durchgangsöffnung (30, 32) ausgebildet ist, und dass sich durch den Zapfen (44, 46) eine Durchgangsbohrung, vorzugsweise ein Durchgangsgewinde (48, 50), für ein Befestigungselement erstreckt, welches durch die Durchgangsöffnung (30, 32) der Aufnahme (30) ragt.

10. Fahrradrahmen nach einem der Ansprüche 1 bis 9, **dadurch gekennzeichnet, dass** an der der Aufnahme (30) abgewandten Rückseite der Kettenstrebe (16) eine Ausnehmung (36) zur Aufnahme einer Gegenplatte (62) vorgesehen ist, und dass die Gegenplatte (62) als Widerlager für Befestigungselemente dient, die sich durch an der Kettenstrebe (16) vorgesehene Durchgangsöffnungen (30, 32) erstrecken und die die Adapterplatte (38, 68) und die Gegenplatte (62) lösbar miteinander verbinden.
